# EUROPEAN PATENT SPECIFICATION

(11) **EP 2 013 990 B1**
(45) Date of publication and mention of the grant of the patent: **14.01.2015**
(21) Application number: 07760726.5
(22) Date of filing: 16.04.2007
(51) Int. Cl.: H04W 72/00, H04W 92/20

(54) **METHODS AND APPARATUS FOR RESOURCE MANAGEMENT ARCHITECTURES FOR INTERNET PROTOCOL BASED RADIO ACCESS NETWORKS**
VERFAHREN UND VORRICHTUNG FÜR RESSOURCENVERWALTUNGSARCHITEKTUREN FÜR INTERNETPROTOKOLL-BASIERTE FUNKZUGANGSNETZE
PROCÉDÉ ET APPAREIL UTILISÉS DANS DES ARCHITECTURES DE GESTION DE RESSOURCE DESTINÉES AUX RÉSEAUX À ACCÈS RADIO BASÉS SUR L'ACCÈS INTERNET

(30) Priority: 17.04.2006 US 405930; 09.05.2006 US 431934
(43) Date of publication of application: 14.01.2009
(73) Proprietor: Intel Corporation, Santa Clara, CA 95054 (US)
(72) Inventor: VENKATACHALAM, Muthaiah, Beaverton, Oregon 97006 (US)
(74) Representative: Want, Clifford James
(86) International application number: PCT/US2007/066726
(87) International publication number: WO 2007/121409

(56) References cited:
- WO-A1-01/65885
- WO-A1-2006/001683
- KR-A- 20060 069 149
- US-A1- 2005 068 967
- Torsten Fahldieck, Achim Brandt: "Primitives for Radio Resource Management (RRM)", IEEE 802.16 Broadband Wireless Access Working Group, no. C802.16g-05/020 29 April 2005 (2005-04-29), pages 0-9, XP002689240, Retrieved from the Internet: URL:http://www.ieee802.org/16/netman/contr ib/C80216g-05_020.pdf [retrieved on 2012-12-13]
- MAUFER C SEMERIA 3COM CORPORATION T: "Introduction to IP Multicast Routing; draft-ietf-mboned-intro-multicast-03.txt", 19970701, vol. mboned, no. 3, 1 July 1997 (1997-07-01), XP015022738, ISSN: 0000-0004
- DEERING D R CHERITON STANFORD UNIVERSITY S E: "Host Groups: A Multicast Extension to the Internet Protocol; rfc966.txt", 19851201, 1 December 1985 (1985-12-01), XP015006963, ISSN: 0000-0003

## Description

### Technical Field

Embodiments of the present invention relate to the field of wireless networks, and more specifically, to methods and apparatus for resource management (RRM) architectures for Internet Protocol (IP) based radio access networks.

### Background

Radio resource management in IP based radio access networks involves procedures that provide decision support for IP based radio access networks, such as, for example, Worldwide Interoperability for Microwave Access (WiMAX) networks, and their associated functions. Some of these functions include, for example, mobile client admission control, i.e., ascertaining that required radio resources are available at a potential target base station (BS) before handover (HO) of service; service flow admission control, i.e., creation or modification of existing/additional service flows for an existing MS in the network; selection of values for admitted and active quality of service (QoS) parameter sets for service flows; load control, which manages situations where system load exceeds the threshold and some counter-measures need to be taken to get the system back to feasible load; and HO preparation and control for improvement and maintenance of overall performance indicators (for example, RRM may assist in system load balancing by facilitating selection of the most suitable base station during a HO of service).

Document Torsten Fahldieck, Achim Brandt: "Primitives for Radio Resource Management (RRM)", IEEE 802.16 Broadband Wireless Access Working Group, no, C802.16g-05/020 29 April 2005 (2005-04-29), pages 0-9, Retrieved from the Internet: URL:hrrp://www.ieee802.org/16/netman/contrib/C80216g-05_020.pdf discloses the current status of the RRM protocol work in WiMAX Forum NWG to the IEEE 802.16g Working Group.

Document MAUFER C SEMERIA 3COM CORPORATION T: "Introduction to IP Multicase Routing; draft-ietf-mboned-intro-multicast-03.txt", 19970701, vol. mboned, no. 3, 1 July 1997 discloses the benefits of multicasting, the MBone, Class D addressing, and the operation of the Internet Group Management Protocol (IGMP).

### Summary

There is provided a method as set out in claim 1, and an apparatus as set out in claim 5.

### Brief Description of the Drawings

Embodiments of the present invention will be readily understood by the following detailed description in conjunction with the accompanying drawings. To facilitate this description, like reference numerals designate like structural elements. Embodiments of the invention are illustrated by way of example and not by way of limitation in the figures of the accompanying drawings.
Fig. 1 is a schematic diagram of exemplary Internet Protocol (IP) based radio access networks incorporated with the teachings of the present invention, in accordance with various embodiments;
Fig. 2 is a schematic diagram of exemplary RRM architecture for access service networks incorporated with the teachings of the present invention, in accordance with various embodiments;
Fig. 3 is a schematic diagram of exemplary RRM architecture for IP based radio access networks that incorporates the teachings of the present invention, in accordance with various embodiments, using IP multicasting;
Fig. 4 is a flowchart illustrating exemplary operation of RRM architecture in accordance with various embodiments of the present invention;
Fig. 5 is a signal diagram illustrating an example multicast packet format for use during communication within multicast groups in accordance with various embodiments of the present invention; and
Fig. 6 is a block diagram representation of an example processor system that may be used to practice various aspects of the present invention.

### Detailed Description of Embodiments of the Invention

In the following detailed description, reference is made to the accompanying drawings which form a part hereof wherein like numerals designate like parts throughout, and in which is shown by way of illustration embodiments in which the invention may be practiced. It is to be understood that other embodiments may be utilized and structural or logical changes may be made without departing from the scope of the present invention. Therefore, the following detailed description is not to be taken in a limiting sense, and the scope of embodiments in accordance with the present invention is defined by the appended claims.

Various operations may be described as multiple discrete operations in turn, in a manner that may be helpful in understanding embodiments of the present invention; however, the order of description should not be construed to imply that these operations are order dependent.

The description may use perspective-based descriptions such as up/down, back/front, and top/bottom. Such descriptions are merely used to facilitate the discussion and are not intended to restrict the application of embodiments of the present invention.

For the purposes of the present invention, the phrase "A/B" means A or B. For the purposes of the present invention, the phrase "A and/or B" means "(A), (B), or (A and B)". For the purposes of the present invention, the phrase "at least one of A, B, and C" means "(A), (B), (C), (A and B), (A and C), (B and C), or (A, B and C)". For the purposes of the present invention, the phrase "(A)B" means "(B) or (AB)" that is, A is an optional element.

The description may use the phrases "in an embodiment," or "in embodiments," which may each refer to one or more of the same or different embodiments. Furthermore, the terms "comprising," "including," "having," and the like, as used with respect to embodiments of the present invention, are synonymous.

Embodiments of the present invention provide methods and apparatus for efficient radio resource management (RRM) architecture for Internet Protocol (IP) based radio access networks. The methods and systems described herein are not limited in this regard.

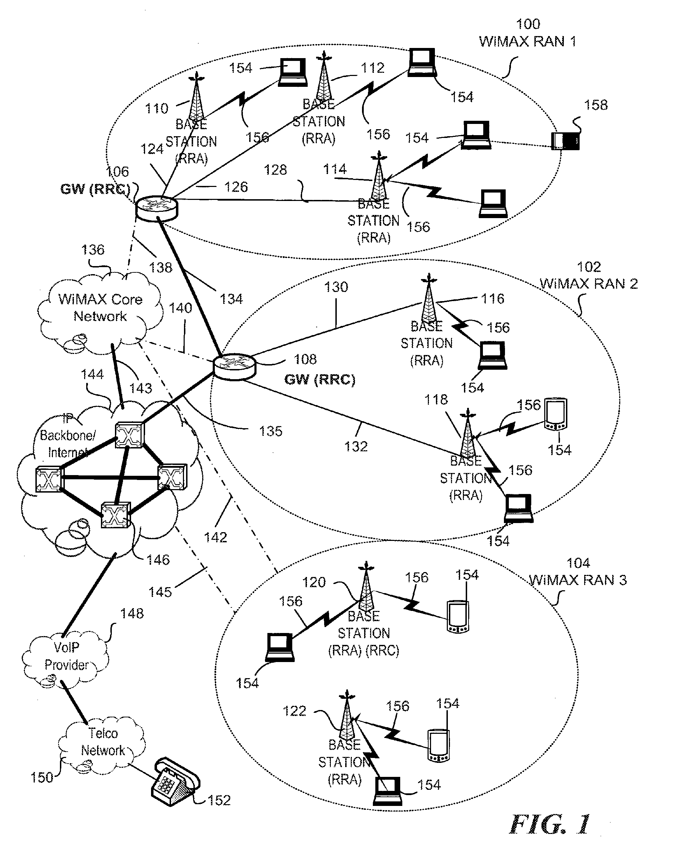

To provide a clear and understandable description of embodiments of the present invention, a brief description of Internet Protocol (IP) based radio access networks (RANs) is provided below. Additionally, examples of methods and apparatus for RRM architectures are described with reference to RANs. It should be understood that principles and techniques of embodiments of the present invention may be employed for RRM architectures of RAN networks such as, for example but not limited to, Worldwide Interoperability Microwave Access (WiMAX) networks, Wireless Fidelity (Wi-Fi) networks, Third Generation (3G) cellular networks and Ultra-wideband (UWB) networks. The IP based RANs of Figure 1 are illustrated and described as WiMAX RANs for simplicity. Additionally, although some of the examples are described with respect to standards developed by Institute of Electrical and Electronic Engineers (IEEE), the methods and systems disclosed herein are not so limited, and are readily applicable to many specifications and/or standards developed by other special interest groups and/or standard development organizations (e.g., Wireless Fidelity (Wi-Fi) Alliance, Worldwide Interoperability for Microwave Access (WiMAX) Forum, Infrared Data Association (IrDA), Third Generation Partnership Project (3GPP), Ultra- wideband (UWB) Forum, etc.).

Fig. 1 illustrates simplified exemplary IP based RANs incorporated with the teachings of the present invention in accordance with various embodiments and Radio Resource Management (RRM) architecture. A first WiMAX RAN 1 (100) is illustrated that includes a gateway (GW) 106 communicatively coupled to base stations 110, 112 and 114 via links 124, 126 and 128, respectively. A second WiMAX RAN 2 (102) is illustrated that includes a GW 108 communicatively coupled to base stations (BS) 116 and 118 via links 130 and 132, respectively. Each GW includes an omnidirectional antenna (not shown). A third WiMAX RAN 3 (104) is illustrated that does not include a gateway but does include two base stations 120 and 122.

Each base station includes an RRM component in the form of a radio resource agent (RRA). RANs 100, 102 and 104 also include another RRM component in the form of at least one radio resource controller (RRC), which may reside in a base station or in a GW depending upon the RAN deployment profile. Thus, in the exemplary embodiment illustrated in Fig. 1, RANs 100 and 102 include a RRC within their GWs 106 and 108, respectively, while RAN 104 includes its RRC within base station 120. In addition, each RAN may include multiple gateways. An Internet Protocol (IP) backbone network 144 is connected to a WiMAX core network 136.

In one example, mobile client devices (MCD) 154 access the networks (via an appropriate base station) using the Physical Layer (PHY) and Media Access Control Layer (MAC) features defined by the IEEE 802.16 family of standards (e.g., the IEEE std. 802.16-2004, published September 18, 2004; the IEEE std. 802.16e, published February 28, 2006; etc.). Exemplary MCDs include notebook computers and hand-held wireless devices (*e.g.,* personal digital assistants (PDAs), pocket PCs, cellular phones supporting 802.16 links, *etc.*).

To support station-side operations, each MCD 154 provides an appropriate RAN interface, such as depicted by a PCMCIA card 158 for a notebook computer. Optionally, the RAN wireless interface may be built into the MCD 154. Each MCD is illustrated communicatively coupled to a base station via a link 156.

In general, an MCD 154 may access a RAN via some form of subscription service offered by a RAN service provider, although some RAN services might be provided free of charge, e.g., University campus, city coverage, etc. As such, GWs 106 and 108 are depicted as being communicatively coupled to and managed by a WiMAX core network 136 via links 138 and 140, respectively. Additionally, GWs 106 and 108 may be communicatively coupled to one another as depicted by link 134. RAN 104 is communicatively coupled to the WiMAX core network via its base stations 120 and 122 as depicted by link 142. It will be understood that the coupling between a given GW and WiMAX core network 136 may be via a dedicated link (*e.g.,* private trunk or the like), or through another communication means, such as via IP backbone network 144, which includes multiple network elements 146 (*e.g.,* backbone switches and routers), as depicted by links 135 and 145. WiMAX core network 136 is communicatively coupled to IP backbone network 144 via link 143.

A Voice over IP (VoIP) provider 148 is illustrated communicatively coupled to IP backbone 144 to enable phone calls to be carried over Internet infrastructure using a packetized transport. For illustrative purposes, the VoIP facilities depicted in Fig. 1 is represented by a VoIP provider network 148, a telecommunications (telco) network 150, and a telephone 152 (or other suitable device such as, for example, desktop computer, notebook computer and hand-held wireless devices (*e.g.,* personal digital assistants (PDAs), pocket PCs, cellular phones)).

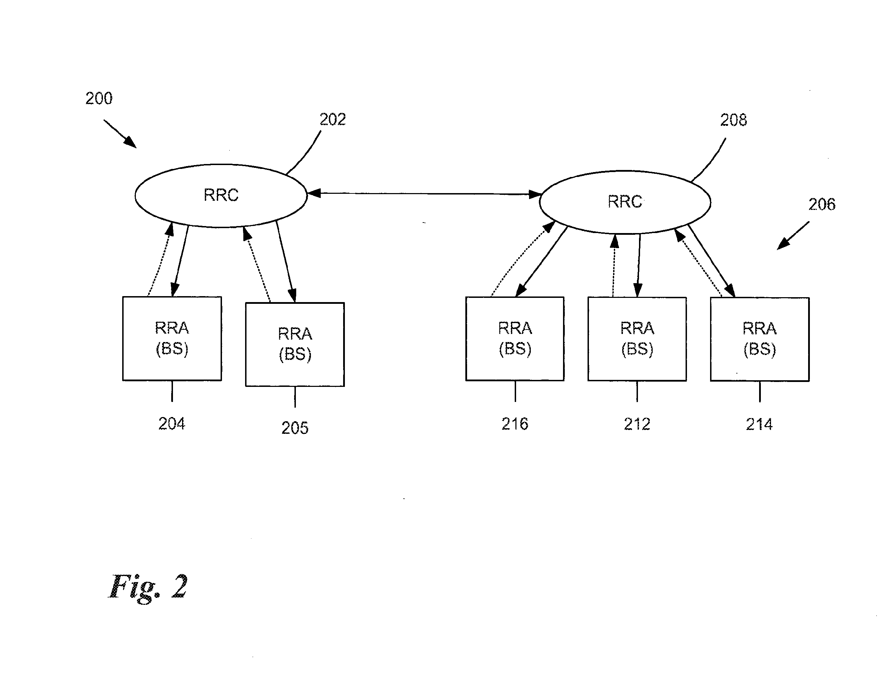

Fig. 2 schematically illustrates general RRM architecture for RANs that incorporates the teachings of the present invention in accordance with various embodiments. As may be seen, a first RAN 200 includes an RRC 202 and RRAs 204, 205. A second RAN 206 includes RRC 208 and RRAs 210, 212 and 214. RRC 202 communicates with RRC 208 and RRAs 204, 205 of its own ASN. RRC 208 communicates with RRC 202 and RRAs 210, 212 and 214. The interfaces over which the RRM messages are sent are IP based.

Key message primitives for RANs include a "base station spare capacity request," which is sent to the base station from which the spare capacity report is needed and a "Per-base station spare capacity report," which is sent in response to a "base station spare capacity request." These reports are indexed by each base station's identification (ID) and indicate the radio resources available at the particular base station, e.g. as a tool for base station selection during network entry or handover. Such reporting may be solicited or unsolicited. Such reports are sent from RRA to RRC, as well as between RRCs such that all interested RRCs may have information on current spare capacity of the base stations for which they are responsible, or, of neighboring base stations in other RANs.

Other primitives include a "Per MCD physical (PHY) layer report" request, which relates to, for example, a request for the radio resources used by the service flows currently active in the MCD and is requested by any base station from the base station serving an MCD, and a "Per MCD PHY report response," which is the response to the "Per MCD PHY layer report" and is sent from the base station serving the MCD to the requesting base station.

Another primitive includes a "base station radio resource status update," which is generated from RRC to RRA to propose a change of a broadcasted "neighbor advertisement message" on the airlink (for handover purposes) from this base station based on the load from neighboring base stations.

The contents of a "base station spare capacity request" may be used at the time of handoff of service for an MCD before the handoff occurs. The base station currently serving the MCD may request this report from some or all of the base stations in a neighbor list of base stations. A neighbor list generally identifies base stations that are neighbors to a particular base station for various purposes such as, for example, handover of service. Additionally, a "Per MCD PHY report response" may be sent in an unsolicited manner from the base station serving the MCD to all the other base stations in the neighbor list during handover preparation or it may be sent from the serving base station to a target base station in response to a "Per MCD physical (PHY) layer report" from the target base station (once the target base station is chosen for handover of service). The contents of a "Per MCD PHY report response" may be used to prune the neighbor list before the neighbor advertisement message is sent on the airlink. This may be sent from an RRC located in the network gateway or a base station to all or some of the base stations in the network.

Many of the RRM messages described above are intended for multiple recipients. A beneficial manner for delivery of the messages intended for multiple recipients (with minimal message copy transmissions) is to use Internet protocol (IP) multicasting. IP multicasting techniques are used to provide communication between radio resource controllers (e.g., gateways) and radio resource agents (e.g., base stations) in a network. IP multicasting involves sending a single message from a source node in a network to a plurality of destination nodes. Typically, a unique IP address is assigned to a predetermined group of communication nodes in the network. A message may then be delivered to that IP address and every node that is a part of the group is able to read the message. This reduces the number of copies of RRM messages that are sent and thus, improves performance in comparison to sending multiple IP unicast messages.

To utilize IP multicasting during RAN operations in a RAN, a number of multicast groups may be formed and maintained in the network. Each of the multicast groups may be assigned a unique IP multicast address. An RRC may then transmit an RRM message as an IP multicast message to a corresponding multicast group when information is needed or being provided. The IP multicast message is sent via IP backbone 144.

Various procedures are defined within the Requests for Comments (RFCs) of the Internet Engineering Task Force (IETF) that may be used to perform various tasks associated with various embodiments of the present invention. For example, RFCs exist for procedures to create multicast groups, to allow entities (e.g., base stations, PCs, etc.) to join and leave multicast groups, to perform packet exchanges within multicast groups, and so on. An example is RFC 966 (1985). These procedures may be used in various embodiments of the invention. Other procedures may alternatively be used. In at least one embodiment of the invention, the base stations in a multicast group use a shortest path tree based multicast distribution tree for the transfer of multicast messages. By using a shortest path tree based multicast distribution tree, reduced delays are incurred in the transfer of messages between the multicast members.

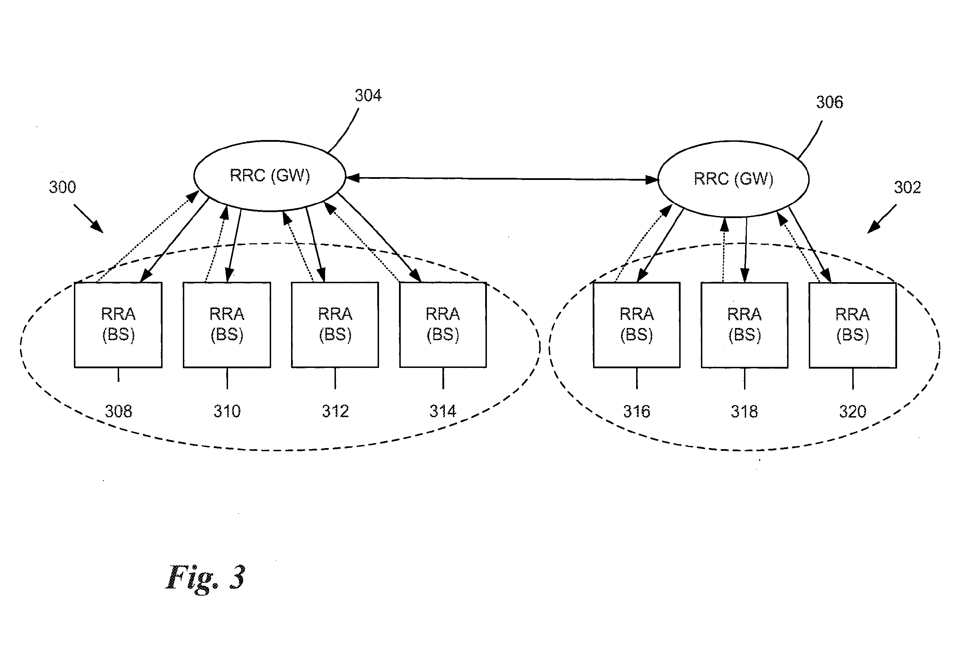

Fig. 3 schematically illustrates RRM architecture that incorporates the teachings of the present invention in accordance with various embodiments using IP multicasting. In particular, Fig. 3 illustrates two RANs 300, 302 arranged as IP multicast groups. Each RAN 300 and 302 includes an RRC 304 and 306, respectively. Multicast group 300 includes a plurality of RRAs 308, 310, 312 and 314, while multicast group 302 includes a plurality of RRAs 316, 318 and 320. Each RRM component may send and receive information and thus, includes a transceiver. In the example of Figure 3, the RRCs reside within a gateway but as mentioned previously, they may reside within a base station.

The creation of the multicast groups may be done in several different ways. Examples include each multicast group including all the base stations that are within a first tier of a center cell within the RAN (i.e., seven base stations form a multicast group); each multicast group including all the base stations in a neighbor list of a center cell (this will change from time to time and hence, the muticast group association will also change from time to time); and each multicast group may optionally include an RRC. The RRC resides in the gateway in the first and second examples and in the base station in the third example. Since the multicast group creation is an implementation aspect, it varies from deployment to deployment.

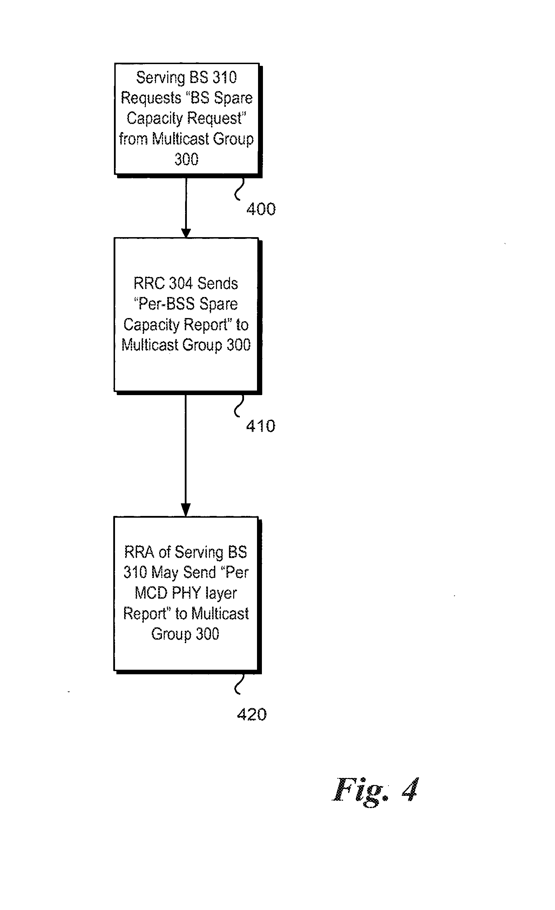

Thus, in accordance with various embodiments of the present invention multicast groups are arranged for reception of messages. Each multicast group includes a plurality of RRAs and possibly one or more RRCs, depending upon implementation, for receiving multicast messages. With reference to Fig. 4, as an example for use of the multicast groups, before handover initiation of service for an MCD from a serving base station, in block 400, the RRA of the serving base station (for example BS 310) may request a "base station spare capacity request" from all or a subset of the potential target base stations in a neighbor list by sending a single IP multicast packet that is destined for all or a subset of the potential target base stations in the neighbor list by sending the request to multicast group 300. In response in block 410, RRC 304 may send a "Per-base station spare capacity report" using a single IP multicast message to the base stations in multicast group 300 to indicate the radio resource availability in the neighboring base stations. Additionally, before handover initiation, in block 420 the RRA of serving base station 310 may send a "Per MCD physical (PHY) layer report" of the MCD undergoing handoff to all or a subset of the potential target base stations in the neighbor list by sending a single IP multicast message to multicast group 300.

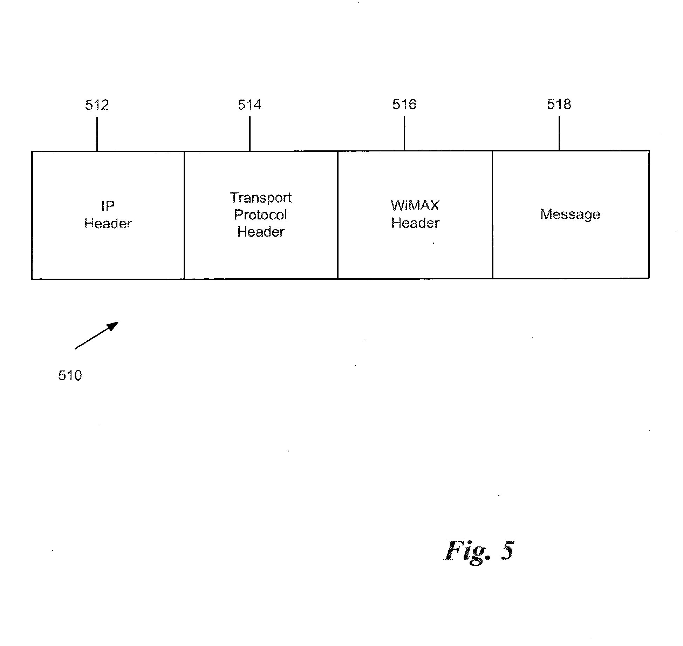

Fig. 5 is a signal diagram illustrating an example multicast packet format 510 that may be used during communication between RRCs and multicast groups in a wireless network in accordance with an embodiment of the present invention. As shown, the multicast packet format 510 may include: an IP header 512, a transport protocol header 514 (e.g., user datagram protocol (UDP), stream control transmission protocol (SCTP), etc.), an RAN header 516, and the message 518. The IP header 512 may contain, among other things, the IP multicast address of the multicast group that is the subject of the current message. The transport protocol header 514 may contain, for example, the source and destination port information and other transport protocol parameters. In one example, the RAN header 516 may contain header information specified by and/or based on the IEEE 802.16 family of standards. The message 518 may include, for example, the ID of a specific RRA from which information is being sought.

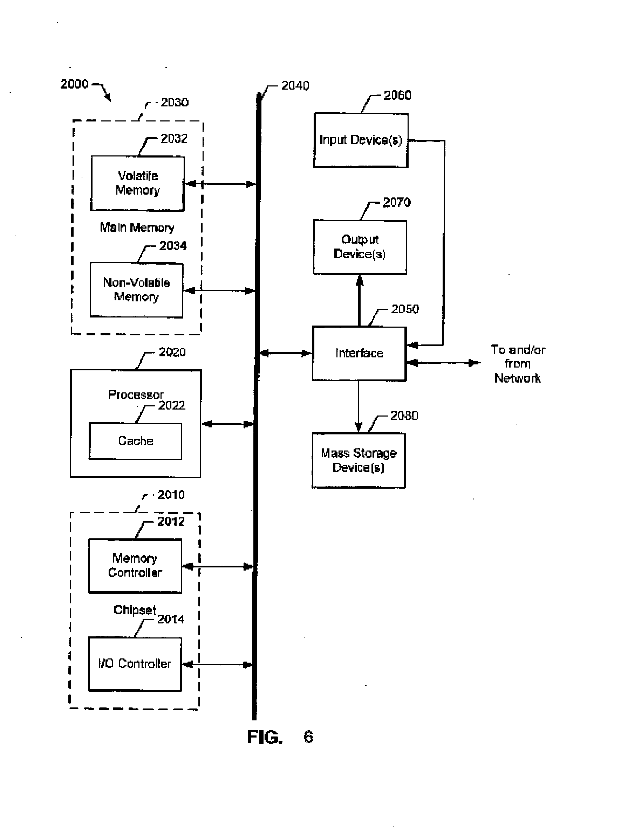

Fig. 6 is a block diagram of an example processor system 2000 adapted to implement the methods and apparatus disclosed herein, in accordance with various embodiments. The processor system 2000 may be a desktop computer, a laptop computer, a handheld computer, a tablet computer, a PDA, a server, an Internet appliance, and/or any other type of computing device.

The processor system 2000 illustrated in Fig. 6 may include a chipset 2010, which includes a memory controller 2012 and an input/output (I/O) controller 2014. The chipset 2010 may provide memory and I/O management functions as well as a plurality of general purpose and/or special purpose registers, timers, etc. that are accessible or used by a processor 2020. The processor 2020 may be implemented using one or more processors, Wireless Personal Area Network (WPAN) components, Wireless Local Area Network (WLAN) components, Wireless Metropolitan Area Network (WMAN) components, Wireless Wide Area Network (WWAN) components, and/or other suitable processing components. For example, the processor 2020 may be implemented using one or more of the Intel^{®} Core^{™} technology, Intel^{®} Pentium^{®} technology, the Intel^{®} Itanium^{®} technology, the Intel^{®} Centrino^{™} technology, the Intel^{®} Core^{™} Duo technology, the Intel^{®} Xeon^{™} technology, and/or the Intel^{®} XScale^{®} technology. In the alternative, other processing technology may be used to implement the processor 2020. The processor 2020 may include a cache 2022, which may be implemented using a first-level unified cache (L1), a second-level unified cache (L2), a third-level unified cache (L3), and/or any other suitable structures to store data.

The memory controller 2012 may perform functions that enable the processor 2020 to access and communicate with a main memory 2030 including a volatile memory 2032 and a non-volatile memory 2034 via a bus 2040. The volatile memory 2032 may be implemented by Synchronous Dynamic Random Access Memory (SDRAM), Dynamic Random Access Memory (DRAM), RAMBUS Dynamic Random Access Memory (RDRAM), and/or any other type of random access memory device. The non-volatile memory 2034 may be implemented using flash memory, Read Only Memory (ROM), Electrically Erasable Programmable Read Only Memory (EEPROM), and/or any other desired type of memory device.

The processor system 2000 may also include an interface circuit 2050 that is coupled to the bus 2040. The interface circuit 2050 may be implemented using any type of interface standard such as an Ethernet interface, a universal serial bus (USB), a third generation input/output (3GIO) interface, and/or any other suitable type of interface.

One or more input devices 2060 may be connected to the interface circuit 2050. The input device(s) 2060 permit an individual to enter data and commands into the processor 2020. For example, the input device(s) 2060 may be implemented by a keyboard, a mouse, a touch-sensitive display, a track pad, a track ball, an isopoint, and/or a voice recognition system.

One or more output devices 2070 may also be connected to the interface circuit 2050. For example, the output device(s) 2070 may be implemented by display devices (e.g., a light emitting display (LED), a liquid crystal display (LCD), a cathode ray tube (CRT) display, a printer and/or speakers). The interface circuit 2050 may include, among other things, a graphics driver card.

The processor system 2000 may also include one or more mass storage devices 2080 to store software and data. Examples of such mass storage device(s) 2080 include floppy disks and drives, hard disk drives, compact disks and drives, and digital versatile disks (DVD) and drives.

The interface circuit 2050 may also include a communication device such as a modem or a network interface card to facilitate exchange of data with external computers via a network. The communication link between the processor system 2000 and the network may be any type of network connection such as an Ethernet connection, a digital subscriber line (DSL), a telephone line, a cellular telephone system, a coaxial cable, etc.

Access to the input device(s) 2060, the output device(s) 2070, the mass storage device(s) 2080 and/or the network may be controlled by the I/O controller 2014. In particular, the I/O controller 2014 may perform functions that enable the processor 2020 to communicate with the input device(s) 2060, the output device(s) 2070, the mass storage device(s) 2080 and/or the network via the bus 2040 and the interface circuit 2050.

While the components shown in Figure 6 are depicted as separate blocks within the processor system 2000, the functions performed by some of these blocks may be integrated within a single semiconductor circuit or may be implemented using two or more separate integrated circuits. For example, although the memory controller 2012 and the I/O controller 2014 are depicted as separate blocks within the chipset 2010, the memory controller 2012 and the I/O controller 2014 may be integrated within a single semiconductor circuit.

Although certain embodiments have been illustrated and described herein for purposes of description of the preferred embodiment, it will be appreciated by those of ordinary skill in the art that a wide variety of alternate and/or equivalent embodiments or implementations calculated to achieve the same purposes may be substituted for the embodiments shown and described without departing from the scope of the present invention. Those with skill in the art will readily appreciate that embodiments in accordance with the present invention may be implemented in a very wide variety of ways. This application is intended to cover any adaptations or variations of the embodiments discussed herein. Therefore, it is manifestly intended that embodiments in accordance with the present invention be limited only by the claims.

## Claims

1. A method comprising:
receiving a first radio resource management, RRM, message at a radio resource controller, RRC, indicating that base station spare capacity information is needed within a network comprising the RRC and a plurality of radio resource agents, RRAs (308...314), wherein the first RRM message, received from a first RRA of the plurality of RRAs, is an Internet Protocol, IP, multicast to a first multicast group (300) that includes at least some of the RRAs and the RRC, wherein the first RRA is included in a first base station; and
transmitting a response, in a form of a second RRM message, from the RRC as an IP multicast to a second multicast group (302) that includes at least some of the RRAs, the response comprising the base station spare capacity information.

2. The method of claim 1, wherein the response is transferred by the second multicast group (302) using a shortest path tree based multicast distribution tree.

3. The method of claim 1, wherein the first RRM message is received unsolicited.

4. The method of claim 1, wherein the first RRM message is received in response to a prior solicitation by the RRC (304).

5. An apparatus comprising:
an RRM component including a transceiver, the RRM component being adapted to:
transmit, through the transceiver in advance of a handover initiation, a base station spare capacity request, in a form of a first RRM message as an Internet Protocol, IP, multicast for transmission to an IP multicast group (300); and
receive, in response to the base station spare capacity request, a per-base station spare capacity report, in a form of a second RRM message as an IP multicast to the IP multicast group (300).

6. The apparatus of claim 5, wherein the IP multicast group comprises a plurality of radio resource agents, RRAs (308...314).

7. The apparatus of claim 5, wherein the RRM message is transferred by the multicast group using a shortest path tree based multicast distribution tree.

8. The apparatus of claim 5, wherein the RRM component is further adapted to transmit, through the transceiver in advance of a handover initiation, a physical layer report of a mobile client device served by the apparatus, in a form of a third RRM message as an IP multicast to the IP multicast group.

9. An apparatus configured to perform any of the methods of claims 1 to 4.

## Patentansprüche

1. Verfahren, das Folgendes umfasst:
Empfangen einer ersten Funkbetriebsmittelmanagementnachricht, RRM-Nachricht, in einer Funkbetriebsmittelsteuereinheit, RRC, die angibt, dass Basisstationsreservekapazitätsinformationen innerhalb eines Netzes, das die RRC und mehrere Funkbetriebsmittelagenten, RRAs (308...314) umfasst, benötigt werden, wobei die erste RRM-Nachricht, die von einem ersten RRA der mehreren RRAs empfangen wird, ein Internetprotokoll-Gruppenruf, IP-Gruppenruf, zu einer ersten Gruppenrufgruppe (300) ist, die wenigstens einige der RRAs und die RRC umfasst, wobei der erste RRA in einer ersten Basisstation enthalten ist; und
Übertragen einer Antwort in einer Form einer zweiten RRM-Nachricht von der RRC als einen IP-Gruppenruf zu einer zweiten Gruppenrufgruppe (302), die wenigstens einige der RRAs enthält, wobei die Antwort die Basisstationsreservekapazitätsinformationen umfasst.

2. Verfahren nach Anspruch 1, wobei die Antwort durch die zweite Gruppenrufgruppe (302) unter Verwendung eines auf dem kürzesten Wegebaum basierenden Gruppenrufverteilungsbaum übertragen wird.

3. Verfahren nach Anspruch 1, wobei die erste RRM-Nachricht freilaufend empfangen wird.

4. Verfahren nach Anspruch 1, wobei die erste RRM-Nachricht in Reaktion auf eine vorherige Anfrage durch die RRC (304) empfangen wird.

5. Vorrichtung, die Folgendes umfasst:
eine RRM-Komponente, die einen Sender/Empfänger umfasst, wobei die RRM-Komponente ausgelegt ist:
durch den Sender/Empfänger vor einer Übergabeeinleitung eine Basisstationsreservekapazitätsanforderung in Form einer ersten RRM-Nachricht als einen Internetprotokoll-Gruppenruf, IP-Gruppenruf, zum Übertragen zu einer IP-Gruppenrufgruppe (300) zu übertragen; und
in Reaktion auf die Basisstationsreservekapazitätsanforderung einen Reservekapazitätsbericht pro Basisstation in einer Form einer zweiten RRM-Nachricht als einen IP-Gruppenruf zu der IP-Gruppenrufgruppe (300) zu empfangen.

6. Vorrichtung nach Anspruch 5, wobei die IP-Gruppenrufgruppe mehrere Funkbetriebsmittelagenten, RRAs, (308...314) umfasst.

7. Vorrichtung nach Anspruch 5, wobei die RRM-Nachricht durch die zweite Gruppenrufgruppe (302) unter Verwendung eines auf dem kürzesten Wegebaum basierenden Gruppenrufverteilungsbaum übertragen wird.

8. Vorrichtung nach Anspruch 5, wobei die RRM-Komponente ferner ausgelegt ist, über den Sender/Empfänger vor einer Übergabeeinleitung einen Bitübertragungsschichtbericht einer mobilen Clientvorrichtung, die durch die Vorrichtung bedient wird, in Form einer dritten RRM-Nachricht als einen IP-Gruppenruf zu der IP-Gruppenrufgruppe zu übertragen.

9. Vorrichtung, die konfiguriert ist, eines der Verfahren nach den Ansprüchen 1 bis 4 auszuführen.

## Revendications

1. Procédé comprenant :
la réception d'un premier message de gestion de ressource radio, RRM, dans un contrôleur de ressource radio, RRC, indiquant qu'une information de capacité de réserve de station de base est requise dans un réseau comprenant le RRC et une pluralité d'agents de ressource radio, RRA (308 ... 314), dans lequel le premier message RRM, reçu d'un premier RRA de la pluralité de RRA, est envoyé par multidiffusion selon le Protocole Internet, IP, à un premier groupe de multidiffusion (300) qui comporte au moins certains des RRA et le RRC, dans lequel le premier RRA est inclus dans une première station de base ; et
la transmission d'une réponse, sous forme d'un second message RRM, depuis le RRC par multidiffusion IP à un second groupe de multidiffusion (302) qui comporte au moins certains des RRA, la réponse comprenant l'information de capacité de réserve de station de base.

2. Procédé selon la revendication 1, dans lequel la réponse est transférée par le second groupe de multidiffusion (302) en utilisant une arborescence de distribution par multidiffusion basée sur le plus court chemin.

3. Procédé selon la revendication 1, dans lequel le premier message RRM est reçu sans avoir été sollicité.

4. Procédé selon la revendication 1, dans lequel le premier message RRM est reçu en réponse à une sollicitation antérieure par le RRC (304).

5. Appareil comprenant :
un composant RRM comportant un émetteur-récepteur,
le composant RRM étant adapté pour :
émettre, par le biais de l'émetteur-récepteur avant le lancement d'un transfert, une requête de capacité de réserve de station de base, sous forme d'un premier message RRM envoyé par multidiffusion selon le Protocole Internet, IP, à un groupe de multidiffusion IP (300) ; et
recevoir, en réponse à la requête de capacité de réserve de station de base, un rapport de capacité de réserve par station de base, sous forme d'un second message RRM envoyé par multidiffusion IP au groupe de multidiffusion IP (300).

6. Appareil selon la revendication 5, dans lequel le groupe de multidiffusion IP comprend une pluralité d'agents de ressource radio, RRA (308 ... 314).

7. Appareil selon la revendication 5, dans lequel le message RRM est transféré par le groupe de multidiffusion en utilisant une arborescence de distribution par multidiffusion basée sur le plus court chemin.

8. Appareil selon la revendication 5, dans lequel le composant RRM est adapté en outre pour transmettre, par le biais de l'émetteur-récepteur avant le lancement d'un transfert, un rapport de couche physique d'un dispositif client mobile desservi par l'appareil, sous forme d'un troisième message RRM envoyé par multidiffusion IP au groupe de multidiffusion IP.

9. Appareil configuré pour exécuter n'importe lequel des procédés des revendications 1 à 4.
